# EUROPEAN PATENT APPLICATION

(11) **EP 1 463 193 A1**
(43) Date of publication of application: **29.09.2004**
(21) Application number: 04396020.2
(22) Date of filing: 24.03.2004
(51) Int. Cl.: H02P 1/16

(54) **Method for controlling rotation speed, controller of rotation speed and blower apparatus**

(30) Priority: 24.03.2003 FI 20030431
(71) Applicant: Trafomic Oy, 21200 Raisio (FI)
(72) Inventor: Mäkinen, Eero, Turku, 20700 (FI); Kaitila, Topias, Raisio (FI)
(74) Representative: Nordin, Leif Göran

(57) **Abstract**

The present invention relates to a method for controlling rotation speed, a controller of rotation speed and a blower apparatus. In the method, the rotation speed of an electric motor (401) is controlled by supplying it with operating voltage typically only in the form of voltage bursts conforming to the wave form of the supplying mains, which bursts are generated so as to comprise no less than one complete cycle of supply voltage.

## Description

### TECHNICAL FIELD OF THE INVENTION

The present invention relates to a method for controlling rotation speed, a controller of rotation speed and a blower apparatus, in accordance with the preambles to the independent claims presented below. The invention relates in particular to a novel way of controlling rotation speed in an electric motor.

### PRIOR ART AND PROBLEMS THEREWITH

The rotation speed of an electric motor has generally been controlled, for example, with triac controllers by chopping the voltage. Other known methods include modifying the supply voltage by means of a transformer or a frequency converter. Disadvantages of known triac controller solutions have been the noise they cause to be emitted from the motor, which is due to the controller's principle of operation, i.e. voltage chopping. The power supply is executed by chopping the sine-wave voltage so that only a portion of the sine-wave voltage is supplied to the motor. Also problematic in the above solution is the moment when the motor is started, as the chopped-up sine-wave pulse voltage is not necessarily sufficient to compensate for the static friction. This is a particular problem especially in conditions where the motor easily gathers dirt or in motors that are rarely used, in which case starting a motor that has gathered dust, for example, requires compensation for a higher than normal static friction. The disadvantages of transformers and frequency converters include size and high price, and furthermore in a transformer, the speed control is not stepless unless a special regulating transformer is used.

### SUMMARY OF THE INVENTION

The purpose of the invention presented here is, among others, to alleviate or even eliminate the above-mentioned problems arising in the prior art.

The purpose of the invention is in particular to create a method and a controller of rotation speed which, using a low-cost solution, enables easy, stepless, maintenance-free and noise-free control of the rotation speed of an electric motor drive which is subject to a moment of inertia.

To accomplish the above mentioned purposes, among others, a method, controller of rotation speed and blower apparatus according to the invention are characterised by what is presented in the characterising parts of the independent claims presented below.

Embodiments and advantages mentioned in this text refer, in so far as they are applicable, to both a method, a controller of rotation speed and a blower apparatus according to the invention, even though this may not be explicitly stated.

In a typical method according to the invention for regulating the rotation speed of an electric motor, pulse voltage, for example sine-wave alternating current (AC), is received. The voltage is supplied to the electric motor for rotating it. Typically, the rotation speed of an electric motor is controlled by supplying the voltage to the motor in the form of as voltage bursts. Such bursts are typically generated so as to comprise no less than one complete cycle of supply voltage. In a typical method according to the invention, operating voltage is supplied to the electric motor only in voltage bursts conforming to the wave form of the supplying mains. The bursts to be supplied typically comprise only complete supply voltage cycles, such as complete sine waves. A typical controller of rotation speed according to the invention is arranged to regulate the rotation speed of an electric motor. The controller incorporates means of reception for receiving pulse voltage, a switch to connect the said voltage to the electric motor, a control unit to provide the rotation speed of the electric motor and means of detection for detecting the zero point of the said pulse voltage. The said control unit is arranged to control the switch to generate a voltage burst for the electric motor in such a way that the burst comprises no less than one complete cycle of supply voltage. The said switch is arranged to supply the said voltage burst to the electric motor.

A typical blower apparatus according to the invention incorporates a blower, an electric motor that rotates the blower and a controller of rotation speed according to the invention. A typical method according to the invention for controlling the rotation speed of an electric motor constitutes part of a method for controlling the rotation speed of a blower apparatus according to the invention.

Advantages brought by a method and an apparatus according to the invention include stepless and noise-free regulation of rotation speed. The construction of the apparatus is simple, which makes it possible to manufacture such apparatuses cost-efficiently. The motor can be set at a very low rotation speed because the motor constantly receives momentary pulses of full voltage and thus generates full starting torque. Momentary full starting torque is also beneficial when starting, for example, old or dirty motors. In apparatuses according to the prior art, low power is obtained by means of chopped pulses or a lowered voltage, which results in a torque that is not always sufficient for starting such a motor. Power and heat losses in an apparatus according to the invention are low because the aforementioned pulses are supplied to the motor while it is rotating, as a result of which current peaks in the motor remain low. Since the sine waves are not chopped, no harmonics are generated either. Harmonics emit sound and may also generate EMC disturbances. Compared with transformer solutions, a controller according to the invention is small in size.

In an embodiment of the invention, the said pulse voltage is investigated to detect its zero point. Using this detection, the aforementioned voltage burst is generated so that the amplitude value of the burst equals zero at the start and at the end of the burst. This solution further emphasises the advantages of the invention.

In an embodiment of the invention, the voltage applied to the motor and the voltage of the mains are compared. By means of this comparison, voltage is connected to the electric motor at a moment when the rates of change of the voltages show the same sign and are essentially equal. In this way, current peaks in the motor remain even lower than if the said pulses were supplied to the motor at a phase where the change of voltage in the motor is opposite to that the mains voltage.

The appended figures and non-independent claims also present other embodiments of the invention and their advantages in addition to those mentioned above.

### BRIEF DESCRIPTION OF THE DRAWINGS

In the following, the invention is described in more detail by referring to the accompanying schematic drawing, in which
- Figure 1: represents a method according to an embodiment of the invention,
- Figure 2: represents a method according to an alternative embodiment of the invention,
- Figure 3: represents a method according to an alternative embodiment of the invention,
- Figure 4: represents an apparatus according to an embodiment of the invention,
- Figure 5: represents an apparatus according to an embodiment of the invention,
- Figure 6: represents an apparatus according to an embodiment of the invention,
- Figure 7: represents a supply of voltage to provide a certain rotation speed,
- Figure 8: represents the supply of voltage to provide the maximum rotation speed,
- Figure 9: represents switching process to connect the supply of voltage to an electric motor,
- Figure 10: represents a diagram of a voltage applied to a motor, and
- Figure 11: represents a diagram of current during an interval of time corresponding to the situation in Figure 10.

### DETAILED DESCRIPTION OF THE EMBODIMENTS OF THE INVENTION

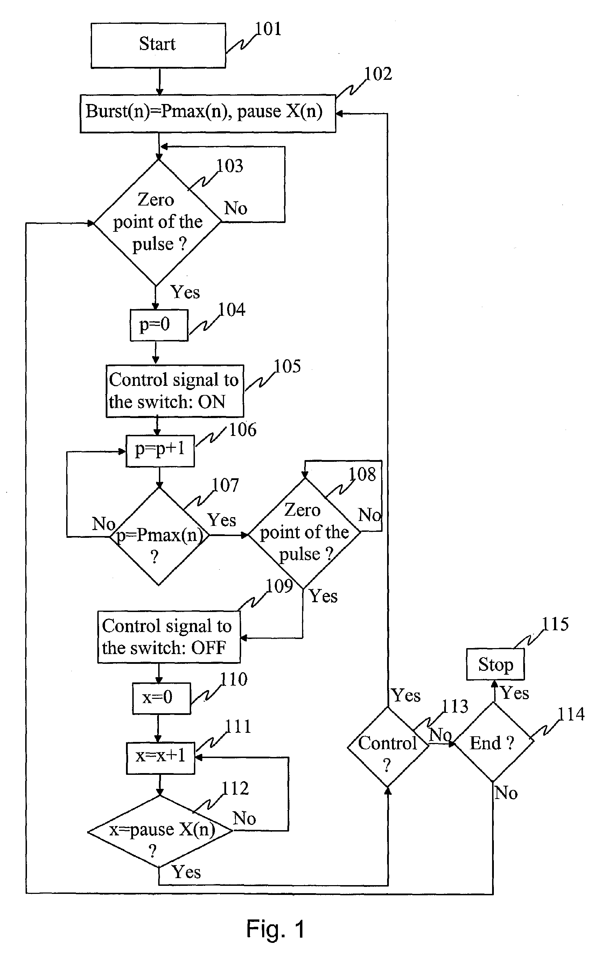

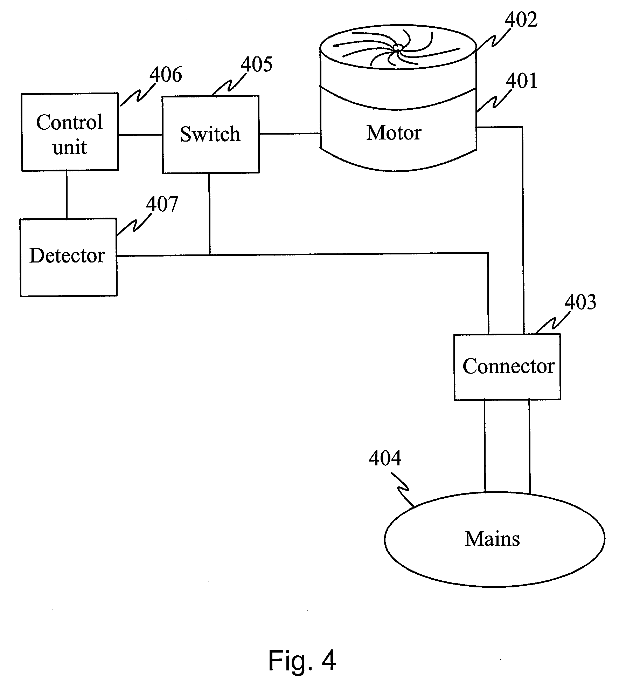

Figure 1 represents a method according to an embodiment of the invention employed for controlling, for example, the rotation speed of an apparatus run by an electric motor illustrated in Fig. 4, such as a blower apparatus 402.

At phase 101 the apparatus is started. Voltage is supplied to the electric motor in the form of bursts comprising no less than one complete cycle, for example a sine wave cycle. By adjusting the regulator of the control unit 306, an appropriate rotation speed is selected at phase 102. The burst(n), where n indicates the rotation speed and may be, for example, an integer between 0 and 100, comprises two portions. The first portion is the number of consecutive pulses with a certain value of n. We may designate this portion by the expression Pmax(n). The other portion is the period of time during which no voltage is supplied to the motor. This period of time is hereafter designated by the expression pause X(n), where X(n) equals the number of consecutive pulses with a certain value of n. At phase 103 the system waits until the value of the voltage pulse amplitude equals zero. After this, at phase 104, the value of the voltage pulse counter is reset to zero. At phase 105, the control signal switch of the control unit is set to ON, after which the switch is in a conductive state and conducts the voltage pulse to the electric motor. The number of voltage pulses is counted at phases 106 and 107 by increasing the value of the counter (p = p +1) for each voltage pulse detected. When the value of the counter, at phase 107, reaches the set maximum value Pmax(n) of the burst(n), the system waits for the zero point of the last pulse at phase 108 and sets the control signal to OFF at phase 109, so that the switch does not conduct voltage pulses to the electric motor. After this, at phase 110, the value of the voltage pulse counter is reset to zero, x = 0. The number of voltage pulses is counted at phases 111 and 112 by increasing the value of the counter (x = x +1) for each voltage pulse detected. When the value of the counter at phase 112 reaches the set maximum value of the pause, pause X(n), the process continues to phase 113, where it detects whether the rotation speed has been adjusted, for example, by the operator of the apparatus. If this is the case the process continues to phase 102, where the values of the new burst are read to the control unit and phases 102-113 are repeated. If no adjustment is necessary at phase 113 the process continues to phase 114, where it detects whether a switch off command has been given, for example, by the operator of the apparatus. If this is the case the system is switched off by the apparatus at phase 115. If no switch off command has been received by the control unit the process is continued by proceeding to phase 103 and repeating phases 103-113.

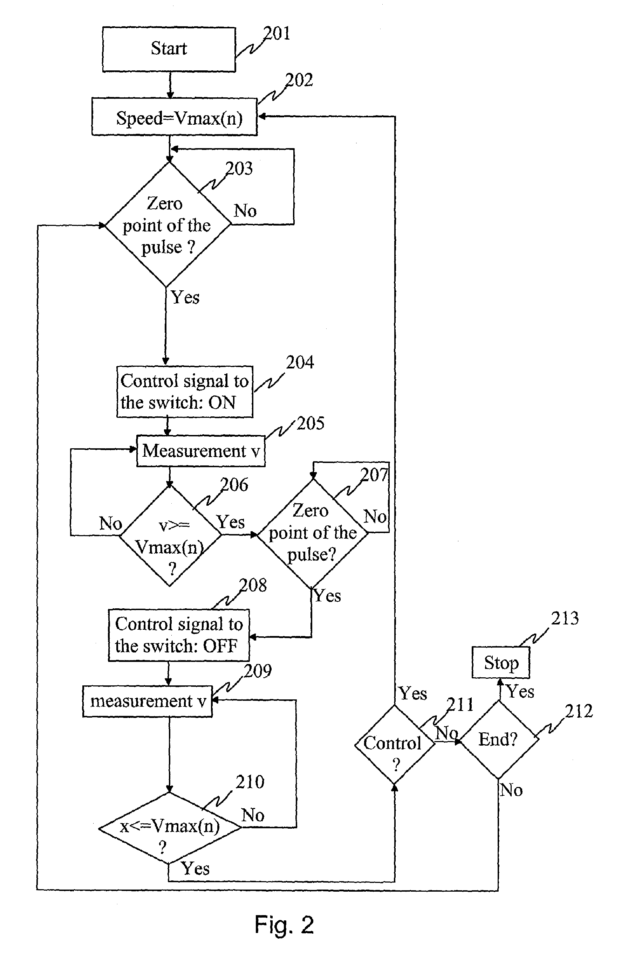

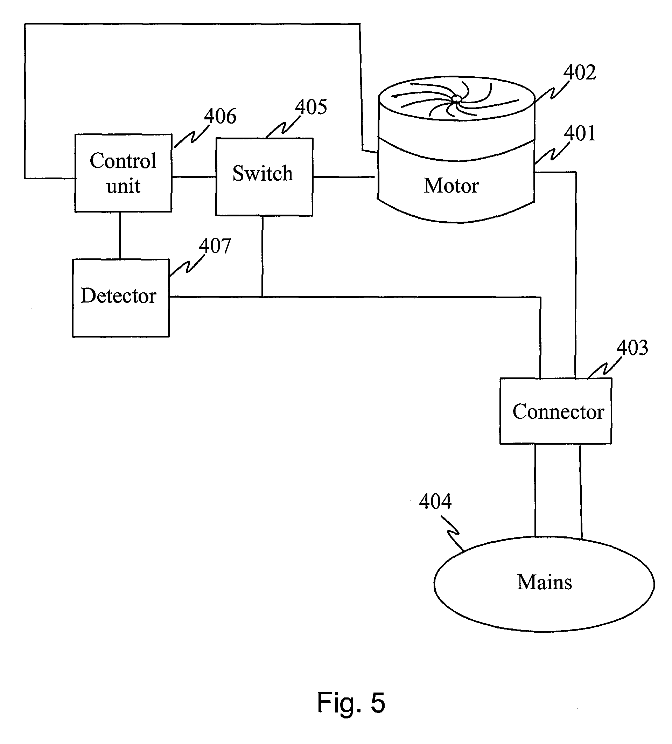

Fig. 2 represents a method according to an embodiment of the invention employed for controlling, for example, the rotation speed of an apparatus run by an electric motor illustrated in Fig. 5, such as a blower apparatus 402. The method described below differs from the method represented in Fig. 1 in that now the control unit measures the rotation speed of the motor, which results in a more regular rotation speed.

At phase 201 the apparatus is started. Voltage is supplied to the electric motor in the form of bursts comprising no less than one complete cycle, for example a sine wave cycle. By adjusting the regulator of the control unit 406, an appropriate rotation speed, Vmax(n) is selected at phase 202, where n indicates the rotation speed and may be, for example, an integer between 0 and 100. At phase 203 the system waits until the voltage pulse amplitude equals zero. After this, at phase 204, the control signal switch of the control unit is set to ON, after which the switch is in a conductive state and conducts the voltage pulse to the electric motor. The value of the rotation speed is measured at phases 205 and 206 by the control unit. When the rotation speed v, at phase 206, reaches the set speed Vmax(n), the system waits for the zero point of the last pulse at phase 207 and sets the control signal to OFF at phase 208 so that the switch does not conduct voltage pulses to the electric motor. After this, at phases 209 and 210, the rotation speed v is again measured by the control unit. When the rotation speed v at phase 210 falls below the set speed Vmax(n) the process continues to phase 211, where it detects whether the rotation speed has been regulated, for example, by the operator of the apparatus. If this is the case the process continues to phase 202, where the value of the new rotation speed is read to the control unit and phases 202-211 are repeated. If no adjustment is necessary at phase 211, the process continues to phase 212, where it detects whether a switch off command has been given, for example, by the operator of the apparatus. If this is the case the system is switched off by the apparatus at phase 213. If no switch off command has been received by the control unit the process is continued by proceeding to phase 203 and by repeating phases 203-211.

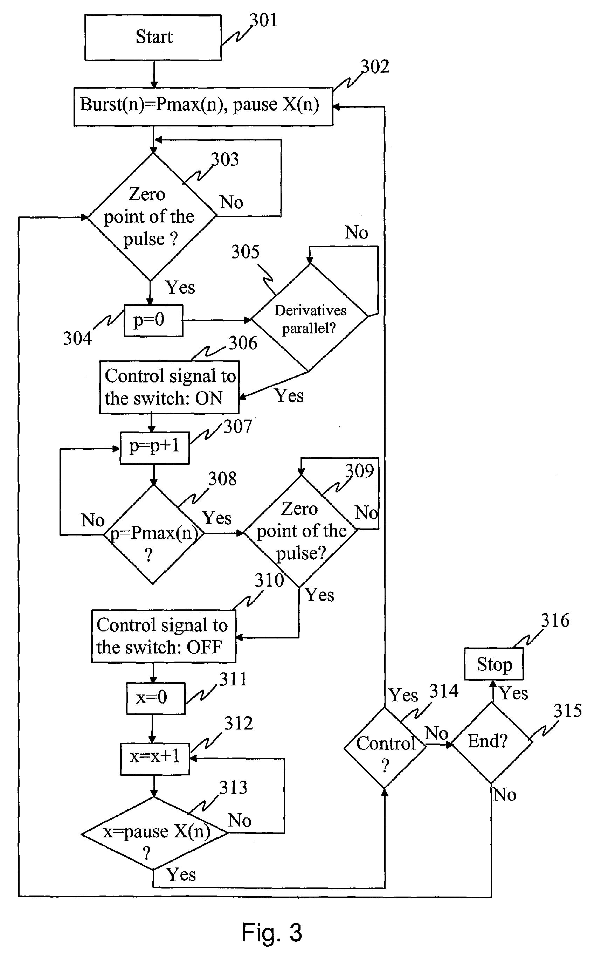

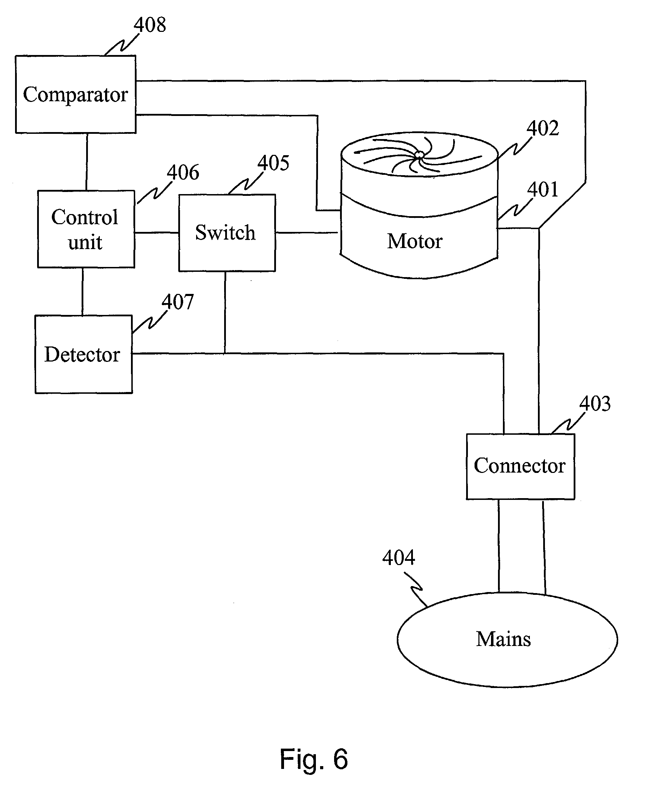

Fig. 3 represents a method according to an embodiment of the invention employed for controlling, for example, the rotation speed of an apparatus run by an electric motor illustrated in Fig. 6, such as a blower apparatus 402. The method described below differs from the method represented in Fig. 1 in that a comparator 408 has been incorporated into the control unit 406.

At phase 301 the apparatus is started. Voltage is supplied to the electric motor in the form of bursts comprising no less than one complete cycle, for example a sine wave cycle. By adjusting the regulator of the control unit 406, an appropriate rotation speed is selected at phase 302. The burst(n), where n indicates the rotation speed and may be, for example, an integer between 0 and 100, comprises two portions. The first portion is the number of consecutive pulses with a certain value of n. We may designate this portion by the expression Pmax(n). The other portion is the period of time during which no voltage is supplied to the motor. This period of time is hereafter designated by the expression pause X(n), where X(n) equals the number of consecutive pulses with a certain value of n. At phase 303 the system waits until the amplitude of the voltage pulse equals zero. After this, at phase 304, the value of the voltage pulse counter is reset to zero. At phase 305, the rate of change of the voltage applied to the motor 401 is compared with the rate of change of the supply voltage 404 and the system waits until the rates of change of the said voltages have the same sign. At phase 306, the control signal switch of the control unit is set to ON, after which the switch is in a conductive state and conducts the voltage pulse to the electric motor. The number of voltage pulses is counted at phases 307 and 308 by increasing the value of the counter (p = p +1) for each voltage pulse detected. When the value of the counter, at phase 308, reaches the set maximum value Pmax(n) of the burst(n), the system waits for the zero point of the last pulse at phase 309 and sets the control signal to OFF at phase 310 so that the switch does not conduct voltage pulses to the electric motor. After this, at phase 311, the value of the voltage pulse counter is reset to zero, x = 0. The number of voltage pulses is counted at phases 312 and 313 by increasing the value of the counter (x = x +1) for each voltage pulse detected. When the value of the counter at phase 313 reaches the set maximum value of the pause, pause X(n), the process continues to phase 314, where it detects whether the rotation speed has been adjusted, for example, by the operator of the apparatus. If this is the case the process continues to phase 302, where the values of the new burst are read to the control unit and phases 302-314 are repeated. If no adjustment is necessary at phase 314 the process continues to phase 315, where it detects whether a switch off command has been given, for example, by the operator of the apparatus. If this is the case the system is switched off by the apparatus at phase 316. If no switch-off command has been received by the control unit the process is continued by proceeding to phase 303 and by repeating phases 303-314.

Fig. 4 represents an apparatus according to an embodiment of the invention comprising an electric motor 401, an apparatus connected to the electric motor, such as a fan 402 and a connector 403 for receiving operating voltage from the electric distribution mains 404. The apparatus furthermore comprises a controller, which controller comprises a switch 405 for connecting the operating voltage to the motor, a control unit 406 for switching the switch 405 on and off, and a detector 407 for detecting the zero point of the operating voltage. Ordinary mains voltage, for example 230 Vac or 110 Vac, may be used as the operating voltage.

A controller according to the invention may be manufactured so that it is very small and light. A rotation speed controller according to the invention, using an operating voltage of 230 Vac, was constructed on a circuit board with a diameter of approximately 65 mm and a height, including the components, of approximately 25 mm. The weight of this controller was less than 50 g. The current-carrying capacity of this embodiment has been tested up to 2 A. All values given here are only examples - the invention may be implemented with the most varied components. A controller according to the invention can easily be dimensioned to conform to a particular device to be rotated and motor to be used.

Fig. 5 represents an apparatus according to an alternative embodiment of the invention, which apparatus differs from the apparatus represented in Fig. 4 in that the control unit 406 receives accurate data on the rotation speed of the motor 401 by means of a sensor installed in the motor. The rotation speed of the motor may thus be determined very accurately.

Monitoring of rotation speed according to the invention may be arranged, for example, so that the rotation speed is always allowed to drop by a certain percentage before a new voltage burst is supplied. Typical limit values of this kind for the drop in rotation speed may be, for example, 10%, 5% or 1% of the desired rotation speed.

Figure 6 represents an apparatus according to another alternative embodiment of the invention, in which the controller comprises a switch 405, a control unit 406, a detector 407 and a comparator 408. According to the invention, the voltages of the motor 401 and of the mains 404 are compared with each other by a comparator 408 which is connected to the control unit 406.

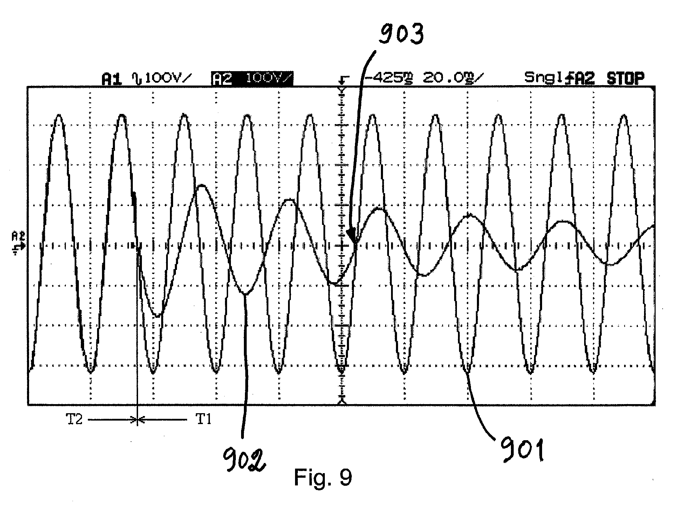

According to the invention, switching to the motor is preferably established when the rates of change of the compared voltages have the same sign and the voltages are substantially equal. Such a switching process is represented in Fig. 9, where the curve 901 is a sine-wave supply voltage and curve 902 the damping voltage of the motor. The preferable moment of switching according to the invention shown in Fig. 9 is designated by the number 903.

A rotatable device 402 according to Figures 4, 5 and 6 is, for example, the fan of a blower of a ventilation device. The invention is very well suited for controlling the rotation speed of electric motors in blowers in particular, at least for the following reasons:
- Blowers typically have rotatable parts of heavy weight and thus with a high moment of inertia. Furthermore, the deceleration of rotating blower fans is typically low due to their good-quality bearings and the relatively low air resistance at a lowered rotation speed. Therefore, the pulse-like power supply to the blower fan, i.e. momentary breaks in power supply, typically does not disturb the blower at all.
- Blowers are often used only temporarily and in dusty or otherwise dirty conditions. Starting a dusty motor or a motor that has stood idle for a long time often requires all the momentary power that is available. By means of the present invention, the entire sine-wave pulse voltage is momentarily applied, i.e. the greatest possible torque can momentarily be supplied for the rotation even if the overall power rate is kept low during the start up.
The invention is well suited for controlling the rotation speed of blowers of various sizes. The power rating of a blower according to the invention may, for example, be 10-500 W. It is clear that the apparatus in question is only an illustrative example of the possibilities for implementing the invention, and a method according to the invention may also be applied to controlling the rotation speed of electric motors in other apparatuses.

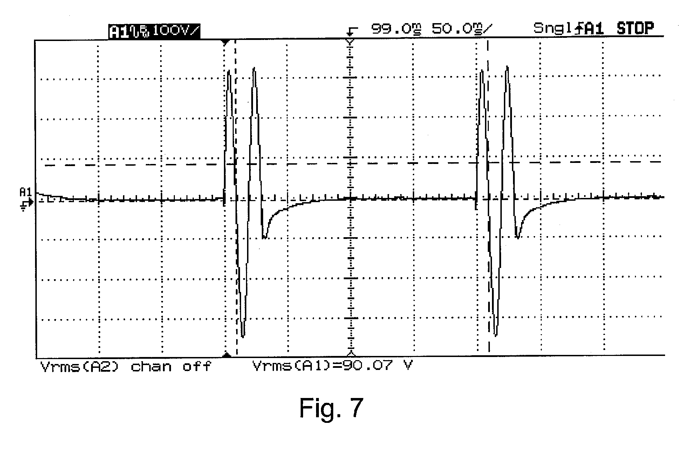

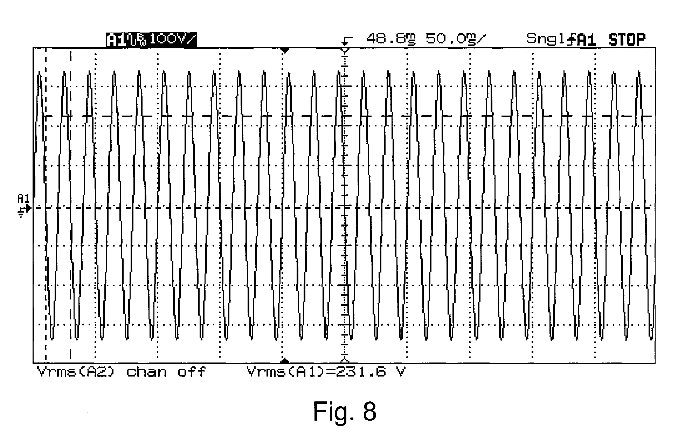

Fig. 7 represents the principle of control. Complete sine waves are supplied at appropriate intervals to the motor so as to generate the desired root mean square (rms) voltage. In the case represented in the Figure, the rms voltage at the current controller setting is approximately 90 Vac. At full speed, the motor is supplied with continuous mains voltage, as in Fig. 8, resulting in an rms voltage of approx. 231 Vac in the case represented in the Figure.

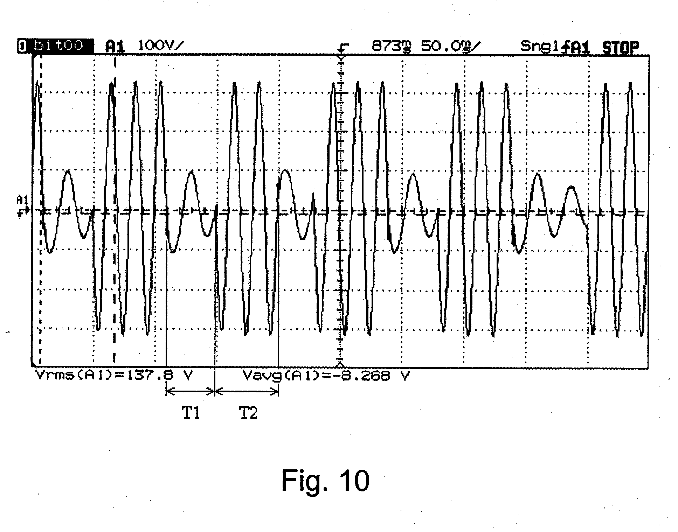

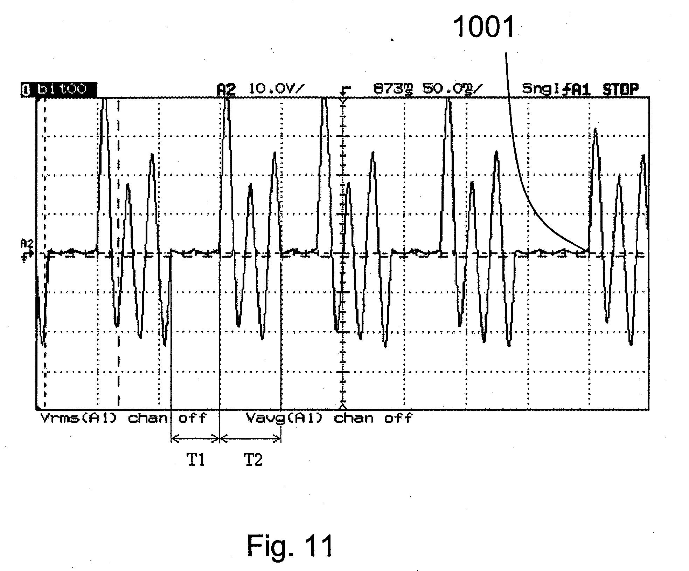

When a high switching frequency is used, the rotation speed of the motor increases and the remanence of an induction motor generates a high voltage in the poles of the motor. The moments of switching, at which the magnetisation has not significantly decreased, constitute a problem. When switching is carried out at a phase where the rates of change of the supply voltage and the voltage applied to the motor have opposite signs, the motor generates a momentary countertorque against the direction of rotation. The said countertorque generates a voltage peak that causes strain on the motor. When switching is carried out at a phase where the rates of change of the supply voltage and the voltage applied to the motor have the same signs, the current peak is lower than described above. Fig. 10 represents a voltage applied to the motor and Fig. 11 the corresponding current during the same period of time. At the interval T1 the switch is not conductive and at the interval T2 the switch is conductive. The voltage scale is 100 V/grid square. The current scale is 1 A/grid square. The last switching pulse in the Figures 10 and 11 shows a switching process, designated by the number 1001, where the direction of change in the voltage applied to the motor is the same as that of the mains voltage.

The Figures represent only a few embodiments of the invention. A Figure and the description relating to it do not separately represent any such issues of secondary importance as regards the main idea of the invention that are known as such or obvious to a person skilled in the art, for example other components or devices that may be required. It is obvious, however, to a person skilled in the art after reading this text, how and why issues of this kind, that are known as such, should be arranged. It is also obvious to a person skilled in the art that the invention is not restricted only to the embodiment presented above, but it may be modified within the scope of the independent claims presented below. The implementation of various means, for example, which are not defined in greater detail in the text, is obvious to a person skilled in the art. The functions of the controller, for example, may be implemented by means of computer software that is saved in a suitable memory device to be run by the system and includes software code elements that are arranged to implement the various phases. The means may also be implemented, for example, by simple circuits of a programmable logic controller. Some possible embodiments of the invention are presented in the dependent claims, and they should not as such be regarded as restricting the scope of protection of this invention.

## Claims

1. A method for controlling the rotation speed of an electric motor (401), in which method
- pulse voltage is received,
- the said voltage is supplied to the electric motor (401) for rotating it,
- the rotation speed of the electric motor (401) is controlled,
**characterised in that**, in this method, the voltage is supplied to the electric motor (401) in the form of voltage bursts, which bursts are generated so as to comprise no less than one complete cycle of supply voltage.

2. A method as claimed in claim 1, **characterised in that** in this method
- the said pulse voltage is investigated to detect its zero point and, using this detection,
- the said voltage burst is generated so that the value of the amplitude of the burst equals zero at the start and at the end of the burst.

3. A method as claimed in claim 1, **characterised in that** in this method
- the voltage applied to the electric motor (401) and the mains voltage (404) are compared and, by means of this comparison,
- the voltage is connected to the electric motor (401) when the rates of change of the compared voltages have the same signs and are substantially equal.

4. A method as claimed in claim 1, **characterised in that** the rotation speed of the electric motor (401) is investigated and its deceleration below a pre-set limit value is detected.

5. A method as claimed in claim 4, **characterised in that** the rotation speed of the electric motor (401) mentioned in this method is limited by lowering the voltage supplied by the controller (405-407, 405-408) to the electric motor (401).

6. A method as claimed in claim 4, **characterised in that** the rotation speed of the electric motor (401) mentioned in this method is limited by lowering the current used by the electric motor (401).

7. A method as claimed in claim 4, **characterised in that**, in this method, the said voltage burst to the electric motor (401) is generated as a response to the detected deceleration of the rotation speed.

8. A controller of rotation speed (405-407) for controlling the rotation speed of the electric motor (401), which controller comprises means of reception (403) for receiving pulse voltage, a switch (405) for connecting the said voltage to the electric motor (401) and a control unit (406) for providing the rotation speed of the electric motor, **characterised in that** the said control unit (406) comprises means for controlling the switch (405) so that the voltage to the electric motor (401) may be controlled to consist of voltage bursts comprising no less than one complete cycle of supply voltage.

9. A controller as claimed in claim 8, **characterised in that** the said control unit (406) comprises means of detection (407) for detecting the zero point of the said pulse voltage and means for arranging the said voltage burst so that the value of the amplitude of the burst equals zero at the start and at the end of the burst.

10. A controller as claimed in claim 8, **characterised in that** the said control unit (406) comprises a comparator (408) for comparing the voltage applied to the electric motor (401) and the voltage of the mains (404) and means for establishing a connection to the electric motor (401) when the rates of change of the voltages have the same sign and are essentially equal.

11. A controller as claimed in claim 8, **characterised in that** the said control unit (406) comprises means for detecting deceleration of the rotation speed below a pre-set limit value.

12. A controller as claimed in claim 11, **characterised in that** the said rotation speed of the electric motor (401) is limited by means of a transformer lowering the voltage supplied by the controller (405-407, 405-408) to the electric motor (401).

13. A controller as claimed in claim 11, **characterised in that** the said rotation speed of the electric motor (401) is limited by means of a current-limiting choke connected in series with the electric motor (401).

14. A controller as claimed in claim 11, **characterised in that** the said control unit (406) is arranged to generate the said voltage burst to the electric motor (401) as a response to the indicated deceleration of rotation speed.

15. A blower apparatus comprising a fan (402) and an electric motor (401) arranged to rotate the fan, and a controller (405-408) of the motor's rotation speed, which controller comprises means of reception (403) for receiving pulse voltage, a switch (405) to connect the said voltage to the electric motor (401), a control unit (406) to provide the rotation speed of the electric motor, means of detection (407) for detecting the zero point of the said pulse voltage, **characterised in that** the said control unit (406) comprises means for controlling the switch (405) so that the voltage supplied to the electric motor (401) may be controlled to consist of voltage bursts comprising no less than one complete cycle of supply voltage.

16. A blower apparatus as claimed in claim 15, **characterised in that** it comprises a comparator (408) for comparing the voltage applied to the electric motor and the supply voltage.
